# EUROPEAN PATENT SPECIFICATION

(11) **EP 3 923 630 B1**
(45) Date of publication and mention of the grant of the patent: **25.06.2025**
(21) Application number: 20782961.5
(22) Date of filing: 27.03.2020
(51) Int. Cl.: H04W 8/24, H04W 36/14, H04W 36/16, H04W 48/18

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 29.03.2019 CN 201910252509
(43) Date of publication of application: 15.12.2021
(73) Proprietor: Huawei Technologies Co., Ltd., Shenzhen, Guangdong 518129 (CN)
(72) Inventor: WANG, Rui, Shenzhen, Guangdong 518129 (CN); DAI, Mingzeng, Shenzhen, Guangdong 518129 (CN); ZENG, Qinghai, Shenzhen, Guangdong 518129 (CN)
(74) Representative: Gill Jennings & Every LLP
(86) International application number: PCT/CN2020/081861
(87) International publication number: WO 2020/200122

(56) References cited:
- WO-A1-2018/174995
- WO-A1-2019/032532
- HUAWEI ET AL: "Security Solution for RRC UE capability transfer", vol. SA WG3, no. Kochi (India); 20190128 - 20190201, 21 January 2019 (2019-01-21), XP051611344, Retrieved from the Internet <URL:http://www.3gpp.org/ftp/tsg%5Fsa/WG3%5FSecurity/TSGS3%5F94%5FKochi/Docs/S3%2D190068%2Ezip> [retrieved on 20190121]
- ERICSSON ET AL: "UE AS capability request over S1", 3GPP DRAFT; S2-121146_WAS1130_WAS_S2-120926_23401-R11_CR_UE-AS-CAPABILITY_REQUEST, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Vancouver, Canada; 20120214 - 20120218, 10 February 2012 (2012-02-10), XP050576954
- QUALCOMM INCORPORATED: "eLTE AS Capability enabling and disabling due to N1 Mode Capability Change", vol. RAN WG2, no. Gothenburg, Sweden; 20180820 - 20180824, 9 August 2018 (2018-08-09), XP051521347, Retrieved from the Internet <URL:http://www.3gpp.org/ftp/tsg%5Fran/WG2%5FRL2/TSGR2%5F103/Docs/R2%2D1811708%2Ezip> [retrieved on 20180809]
- HUAWEI ET AL: "Discussion on the UE capability of LTE-5GC", vol. RAN WG2, no. Athens, Greece; 20190225 - 20190301, 15 February 2019 (2019-02-15), XP051603222, Retrieved from the Internet <URL:http://www.3gpp.org/ftp/tsg%5Fran/WG2%5FRL2/TSGR2%5F105/Docs/R2%2D1901873%2Ezip> [retrieved on 20190215]
- LG ELECTRONICS INC: "Issues on disabling/re-enabling N1 mode", vol. RAN WG2, no. Gothenburg, Sweden; 20180820 - 20180824, 17 August 2018 (2018-08-17), XP051522548, Retrieved from the Internet <URL:http://www.3gpp.org/ftp/tsg%5Fran/WG2%5FRL2/TSGR2%5F103/Docs/R2%2D1812969%2Ezip> [retrieved on 20180817]
- QUALCOMM INCORPORATED: "R2-1811708, eLTE AS Capability enabling and disabling due to N1 Mode Capability Change", 3GPP TSG-RAN2 MEETING #103, 24 August 2018 (2018-08-24), XP051521347
- QUALCOMM INCORPORATED: "R2-1811708, eLTE AS Capability enabling and disabling due to N1 Mode Capability Change", 3GPP TSG-RAN2 MEETING #103, 24 August 2018 (2018-08-24), XP051521347
- HUAWEI ET AL.: "S3-190068, Security Solution for RRC UE capability transfer", 3GPP TSG SA WG3 (SECURITY) MEETING #94, 1 February 2019 (2019-02-01), XP051611344
- NOKIA ET AL.: "R2-1807168, Disabling NG-RAN capability impacts to Access Stratum", 3GPP TSG-RAN WG2 MEETING #102, 25 May 2018 (2018-05-25), XP051464533

## Description

### TECHNICAL FIELD

Implementations of this application relates to the field of communication technologies, and in particular, to a communication method and apparatus.

### BACKGROUND

As communication technologies develop, a terminal that can access both an evolved packet core (the evolved packet core, EPC) and a 5th generation core network (the 5th generation core network, 5GCN) appears. The 5GCN may also be referred to as a 5GC.

Currently, as stipulated in a related standard, if the terminal cannot perform a first service in a 5th generation communication technology (the 5 generation mobile communication technology, 5G) network (for example, the 5G network does not support the first service, or the terminal in the 5G network does not support in performing the first service), the terminal disables an N1 mode (mode) capability of the terminal, that is, disables a capability of accessing the 5GC by the terminal.

In this case, if a 4th generation communication technology (the 4 generation mobile communication technology, 4G) network supports the first service, the terminal accesses the EPC. To avoid handing over/redirecting the terminal to the 5GC, an access network device in the 4G network needs to learn that the terminal has disabled the N1 mode capability. However, currently, there is no method for how the access network device learns that the terminal has disabled the N1 mode capability.

QUALCOMM INCORPORATED: "eLTE AS Capability enabling and disabling due to N1 Mode Capability Change", vol. RAN WG2, no. Gothenburg, Sweden; 20180820 - 20180824, 9 August 2018 (2018-08-09), relates to eLTE AS capability enabling and disabling due to N1 mode capability change.

HUAWEI ET AL: "Discussion on the UE capability of LTE-5GC", vol. RAN WG2, no. Athens, Greece; 20190225 - 20190301, 15 February 2019 (2019-02-15), relates to UE capability of LTE-5GC.

LG ELECTRONICS INC: "Issues on disabling/re-enabling N1 mode", vol. RAN WG2, no. Gothenburg, Sweden; 20180820 - 20180824, 17 August 2018 (2018-08-17), relates to disabling/re-enabling N1 mode.

WO 2018/174995A1 relates to handling of user equipment coverage enhancement mode b radio capability mismatch due to change in user equipment usage setting.

### SUMMARY

Implementations of this application provide a communication method and apparatus, and provide a manner in which an access network device determines that a terminal has disabled an NI mode capability.

The invention has been defined in the independent claims. Further specific technical features have been defined in the dependent claims.

According to a first aspect, a communication method is provided. After disabling a capability of accessing a first network, a terminal receives a wireless capability obtaining message from an access network device of a second network, where the wireless capability obtaining message is used to request to obtain a wireless capability of the terminal. Correspondingly, the terminal sends, to the access network device of the second network, a first notification message used to indicate that the terminal does not support access to the first network. In this way, the access network device of the second network can learn that the terminal has disabled access to the first network. It can be learned that, according to the communication method provided in this application, the access network device can learn that the terminal has disabled access to the first network.

The first notification message does not include first wireless capability information, the first wireless capability information is used to indicate that the terminal supports access to the first network, and the first wireless capability information includes at least one of information used to indicate a radio capability of the terminal to access the first network, information used to indicate a capability of the terminal to hand over from the second network to the first network, information used to indicate a capability of the terminal to redirect from the second network to the first network, or information used to indicate a capability of the terminal to access the first network through dual connectivity.

Optionally, if the first network is a 5G network, and the second network is a 4G network, in the communication method provided in this implementation of this application, the access network device of the 4G network can learn that the terminal has disabled an N1 mode capability.

If the first network is a 4G network, and the second network is a 5G network, in the communication method provided in this implementation of this application, the access network device of the 5G network can learn that the terminal has disabled an S1 mode capability. The S1 mode capability of the terminal refers to a capability of the terminal to access an EPC.

Optionally, in a possible implementation of this application, after disabling the capability of accessing the first network, the terminal further sends, to a core network device of the second network, first information used to indicate that the wireless capability of the terminal changes, so that the core network device, of the second network, that has stored wireless capability information of the terminal deletes the wireless capability information, of the terminal, stored in the core network device.

Optionally, in another possible implementation of this application, the communication method provided in this application further includes: The terminal enables the capability of accessing the first network, and sends a second notification message to the access network device of the second network, where the second notification message is used to indicate that the terminal supports access to the first network.

In a scenario in which the terminal has disabled the capability of accessing the first network, the terminal may further reenable, based on an actual requirement, the capability of accessing the first network. When the terminal reenables the capability of accessing the first network, the terminal may further send the second notification message to the access network device of the second network. In this way, the access network device of the second network may learn that the terminal is enabled to access the first network, and may further hand over the terminal to the first network.

Optionally, in another possible implementation of this application, if the first network is a 5th generation communication technology 5G network, the radio capability of the terminal to access the first network includes a capability of the terminal to support access to a 5G core network through evolved universal terrestrial radio access (evolved universal terrestrial radio access, E-UTRA), and a capability of the terminal to support access to the 5G core network through new radio (new radio, NR).

According to a second aspect, a communication apparatus is provided. The communication apparatus can implement functions according to any one of the first aspect and the possible implementations of the first aspect. These functions may be implemented by hardware, or may be implemented by hardware executing corresponding software. The hardware or the software includes one or more modules corresponding to the foregoing functions.

In a possible manner of this application, the communication apparatus may include a processing unit, a receiving unit, and a sending unit. The processing unit, the receiving unit, and the sending unit may perform corresponding functions in the communication method according to any one of the first aspect and the possible implementations of the first aspect. For example, the processing unit is used to disable a capability of accessing a first network; the receiving unit is configured to receive a wireless capability obtaining message from an access network device of a second network, where the wireless capability obtaining message is used to request to obtain a wireless capability of a terminal; and the sending unit is configured to send a first notification message to the access network device of the second network, where the first notification message is used to indicate that the terminal does not support access to the first network.

According to a third aspect, a communication apparatus is provided. The communication apparatus includes a processor, and the processor is configured to: be coupled to a memory, and read and execute instructions in the memory, to implement the communication method according to any one of the first aspect and the possible implementations of the first aspect.

Optionally, the communication apparatus may further include the memory, and the memory is configured to store program instructions and data of the communication apparatus.

Optionally, the communication apparatus may further include a communication interface. The communication interface is configured to perform, under control of the processor of the communication apparatus, steps of sending and receiving data, signaling, or information in the communication method according to any one of the first aspect and the possible implementations of the first aspect, for example, receiving a wireless capability obtaining message, and sending a first notification message.

Optionally, the communication apparatus may be a terminal, or may be an apparatus as a part in the terminal, for example, a chip system in the terminal. The chip system is configured to support the terminal in implementing functions according to any one of the first aspect and the possible implementations of the first aspect, for example, receiving or processing data and/or information in the foregoing communication method. The chip system includes a chip, and may also include another discrete component or circuit structure.

According to a fourth aspect, a computer-readable storage medium is further provided. The computer-readable storage medium stores instructions. When the instructions are run on a communication apparatus, the communication apparatus is enabled to perform the communication method according to the first aspect and the possible implementations of the first aspect.

According to a fifth aspect, a computer program product including instructions is further provided. When the computer program product runs on a communication apparatus, the communication apparatus is enabled to perform the communication method according to the first aspect and the possible implementations of the first aspect.

It should be noted that all or some of the foregoing instructions may be stored in a first computer storage medium. The first computer storage medium may be packaged together with a processor, or the first computer storage medium and the processor may be separately packaged. This is not specifically limited in this application.

In this application, for detailed descriptions of the second aspect, the third aspect, the fourth aspect, the fifth aspect, and the implementations of the second aspect, the third aspect, the fourth aspect, and the fifth aspect, refer to the detailed descriptions of the first aspect and the implementations of the first aspect. In addition, for beneficial effects of the second aspect, the third aspect, the fourth aspect, the fifth aspect, and the implementations of the second aspect, the third aspect, the fourth aspect, and the fifth aspect, refer to analysis of the beneficial effects of the first aspect and the implementations of the first aspect. Details are not described herein again.

According to a sixth aspect, a communication method is provided. After receiving non-access NAS capability information used to indicate that a terminal has disabled a capability of accessing a first network, a core network device of a second network sends indication information to an access network device of the second network, where the indication information is used to indicate to obtain a wireless capability of the terminal, or is used to indicate that the access network device of the second network cannot connect the terminal to the first network. In this way, the access network device of the second network can learn that the terminal has disabled access to the first network, and therefore does not connect the terminal to the first network.

Optionally, in a possible implementation of this application, before sending the indication information to the access network device of the second network, the core network device of the second network further receives first information from the terminal, where the first information is used to indicate that the wireless capability of the terminal changes. Subsequently, the core network device of the second network deletes first wireless capability information and second wireless capability information based on the first information. The first wireless capability information is used to indicate that the terminal supports access to the first network, and the second wireless capability information is used to indicate that the terminal supports access to the second network.

Before the core network device of the second network provides a service for the terminal that has disabled the capability of accessing the first network, the core network device of the second network may have stored the first wireless capability information and the second wireless capability information. After receiving the first information, the core network device of the second network learns that the wireless capability of the terminal changes. In this case, the wireless capability information stored in the core network device of the second network does not correspond to the wireless capability of the terminal. Therefore, the core network device of the second network deletes the first wireless capability information and the second wireless capability information.

Optionally, in another possible implementation of this application, the first wireless capability information includes at least one of information used to indicate a radio capability of the terminal to access the first network, information used to indicate a capability of the terminal to hand over from the second network to the first network, information used to indicate a capability of the terminal to redirect from the second network to the first network, or information used to indicate a capability of the terminal to access the first network through dual connectivity; and
the second wireless capability information includes at least one of information used to indicate a radio capability of the terminal to access the second network, information used to indicate a capability of the terminal to hand over from the first network to the second network, information used to indicate a capability of the terminal to redirect from the first network to the second network, or information used to indicate a capability of the terminal to access the second network through dual connectivity.

Optionally, in another possible implementation of this application, if the first network is a 5th generation communication technology 5G network, the radio capability of the terminal to access the first network includes a capability of the terminal to support access to a 5G core network through evolved universal terrestrial radio access E-UTRA, and a capability of the terminal to support access to the 5G core network through new radio NR; and if the second network is a 5th generation communication technology 5G network, the radio capability of the terminal to access the second network includes a capability of the terminal to support access to a 5G core network through E-UTRA, and a capability of the terminal to support access to the 5G core network through NR.

According to a seventh aspect, a communication apparatus is provided. The communication apparatus can implement functions according to any one of the sixth aspect and the possible implementations of the sixth aspect. These functions may be implemented by hardware, or may be implemented by hardware executing corresponding software. The hardware or the software includes one or more modules corresponding to the foregoing functions.

In a possible manner of this application, the communication apparatus may include a receiving unit and a sending unit. The receiving unit and the sending unit may perform corresponding functions in the communication method according to any one of the sixth aspect and the possible implementations of the sixth aspect. For example, the receiving unit is configured to receive non-access NAS capability information from a terminal, where the NAS capability information is used to indicate that the terminal has disabled a capability of accessing a first network; and the sending unit is configured to send indication information to an access network device of a second network, where the indication information is used to indicate to obtain a wireless capability of the terminal, or is used to indicate that the access network device of the second network cannot connect the terminal to the first network.

According to an eighth aspect, a communication apparatus is provided. The communication apparatus includes a processor, and the processor is configured to: be coupled to a memory, and read and execute instructions in the memory, to implement the communication method according to any one of the sixth aspect and the possible implementations of the sixth aspect.

Optionally, the communication apparatus may further include the memory, and the memory is configured to store program instructions and data of the communication apparatus.

Optionally, the communication apparatus may further include a communication interface. The communication interface is configured to perform, under control of the processor of the communication apparatus, steps of sending and receiving data, signaling, or information in the communication method according to any one of the sixth aspect and the possible implementations of the sixth aspect, for example, receiving NAS capability information, and sending indication information.

Optionally, the communication apparatus may be a core network device of a second network, or may be an apparatus as a part in the core network device of the second network, for example, a chip system in the core network device of the second network. The chip system is configured to support the core network device of the second network in implementing functions according to any one of the sixth aspect and the possible implementations of the sixth aspect, for example, sending or processing data and/or information in the foregoing communication method. The chip system includes a chip, and may also include another discrete component or circuit structure.

According to a ninth aspect, a computer-readable storage medium is further provided. The computer-readable storage medium stores instructions. When the instructions are run on a communication apparatus, the communication apparatus is enabled to perform the communication method according to the sixth aspect and the possible implementations of the sixth aspect.

According to a tenth aspect, a computer program product including instructions is further provided. When the computer program product runs on a communication apparatus, the communication apparatus is enabled to perform the communication method according to the sixth aspect and the possible implementations of the sixth aspect.

It should be noted that all or some of the foregoing instructions may be stored in a first computer storage medium. The first computer storage medium may be packaged together with a processor, or the first computer storage medium and the processor may be separately packaged. This is not specifically limited in this application.

In this application, for detailed descriptions of the seventh aspect, the eighth aspect, the ninth aspect, the tenth aspect, and the implementations of the seventh aspect, the eighth aspect, the ninth aspect, and the tenth aspect, refer to the detailed descriptions of the sixth aspect and the implementations of the sixth aspect. In addition, for beneficial effects of the seventh aspect, the eighth aspect, the ninth aspect, the tenth aspect, and the implementations of the seventh aspect, the eighth aspect, the ninth aspect, and the tenth aspect, refer to analysis of the beneficial effects of the sixth aspect and the implementations of the sixth aspect. Details are not described herein again.

According to an eleventh aspect, a communication method is provided. An access network device of a second network sends, to a terminal, a wireless capability obtaining message used to request to obtain a wireless capability of the terminal. Subsequently, the access network device of the second network receives a first notification message from the terminal, where the first notification message is used to indicate that the terminal does not support access to a first network. In this way, the access network device of the second network may determine, based on the first notification message, that the terminal does not support access to the first network.

The first notification message does not include first wireless capability information, and the first wireless capability information includes at least one of information used to indicate a radio capability of the terminal to access the first network, information used to indicate a capability of the terminal to hand over from the second network to the first network, information used to indicate a capability of the terminal to redirect from the second network to the first network, or information used to indicate a capability of the terminal to access the first network through dual connectivity.

It is easy to understand that, for the terminal that has a capability of accessing the first network and the second network, if the terminal does not support access to the first network, it may be considered that the terminal disables access to the first network.

Optionally, in a possible implementation of this application, in addition to the foregoing descriptions, the access network device of the second network further sends handover indication information to a target device, where the handover indication information is used to indicate that the terminal does not support access to the first network. In this way, in a scenario in which the access network device of the second network determines to hand over the terminal to the target device, the target device may determine, based on the handover indication information, that the terminal cannot be connected to the first network, so that consistency of performance of the terminal is maintained, unnecessary signaling exchange is reduced, and a waste of resources is further reduced.

Optionally, in another possible implementation of this application, before sending the wireless capability obtaining message to the terminal, the access network device of the second network further establishes a communication connection to the terminal, and receives indication information from a core network device of the second network. The indication information may be used to indicate to obtain the wireless capability of the terminal, or may be used to indicate that the access network device of the second network cannot connect the terminal to the first network.

In a scenario in which the access network device of the second network establishes the communication connection to the terminal, if the access network device of the second network fails to obtain the wireless capability of the terminal from the core network device of the second network, the access network device of the second network communicates with the terminal, to obtain the wireless capability of the terminal. In this way, the access network device of the second network may learn whether the terminal disables access to the first network. If the access network device of the second network obtains the indication information that is sent by the core network device of the second network and that is used to indicate that the terminal cannot be connected to the first network, the access network device of the second network may determine the wireless capability of the terminal based on the indication information.

Optionally, in another possible implementation of this application, the access network device of the second network further receives a second notification message from the terminal, where the second notification message is used to indicate that the terminal supports access to the first network.

In a scenario in which the terminal has disabled the capability of accessing the first network, the terminal may further reenable the capability of accessing the first network. If the terminal reenables the capability of accessing the first network, the terminal may send, to the access network device of the second network, the second notification message used to indicate that the terminal supports access to the first network. In this way, the access network device of the second network may determine the wireless capability of the terminal in time.

Optionally, in another possible implementation of this application, if the first network is a 5th generation communication technology 5G network, the radio capability of the terminal to access the first network includes a capability of the terminal to support access to a 5G core network through E-UTRA, and a capability of the terminal to support access to the 5G core network through NR.

According to a twelfth aspect, a communication apparatus is provided. The communication apparatus can implement functions according to any one of the eleventh aspect and the possible implementations of the eleventh aspect. These functions may be implemented by hardware, or may be implemented by hardware executing corresponding software. The hardware or the software includes one or more modules corresponding to the foregoing functions.

In a possible manner of this application, the communication apparatus may include a sending unit and a receiving unit. The sending unit and the receiving unit may perform corresponding functions in the communication method according to any one of the eleventh aspect and the possible implementations of the eleventh aspect. For example, the sending unit is configured to send a wireless capability obtaining message to a terminal, where the wireless capability obtaining message is used to request to obtain a wireless capability of the terminal; and the receiving unit is configured to receive a first notification message from the terminal, where the first notification message is used to indicate that the terminal does not support access to a first network.

According to a thirteenth aspect, a communication apparatus is provided. The communication apparatus includes a processor, and the processor is configured to: be coupled to a memory, and read and execute instructions in the memory, to implement the communication method according to any one of the eleventh aspect and the possible implementations of the eleventh aspect.

Optionally, the communication apparatus may further include the memory, and the memory is configured to store program instructions and data of the communication apparatus.

Optionally, the communication apparatus may further include a communication interface. The communication interface is configured to perform, under control of the processor of the communication apparatus, steps of sending and receiving data, signaling, or information in the communication method according to any one of the eleventh aspect and the possible implementations of the eleventh aspect, for example, sending measurement configuration information.

Optionally, the communication apparatus may be an access network device of a second network, or may be an apparatus as a part in the access network device of the second network, for example, a chip system in the access network device of the second network. The chip system is configured to support the access network device of the second network in implementing functions according to any one of the eleventh aspect and the possible implementations of the eleventh aspect, for example, sending or processing data and/or information in the foregoing communication method. The chip system includes a chip, and may also include another discrete component or circuit structure.

According to a fourteenth aspect, a computer-readable storage medium is further provided. The computer-readable storage medium stores instructions. When the instructions are run on a communication apparatus, the communication apparatus is enabled to perform the communication method according to the eleventh aspect and the possible implementations of the eleventh aspect.

According to a fifteenth aspect, a computer program product including instructions is further provided. When the computer program product runs on a communication apparatus, the communication apparatus is enabled to perform the communication method according to the eleventh aspect and the possible implementations of the eleventh aspect.

It should be noted that all or some of the foregoing instructions may be stored in a first computer storage medium. The first computer storage medium may be packaged together with a processor, or the first computer storage medium and the processor may be separately packaged. This is not specifically limited in this application.

In this application, for detailed descriptions of the twelfth aspect, the thirteenth aspect, the fourteenth aspect, the fifteenth aspect, and the implementations of the twelfth aspect, the thirteenth aspect, the fourteenth aspect, and the fifteenth aspect, refer to the detailed descriptions of the eleventh aspect and the implementations of the eleventh aspect. In addition, for beneficial effects of the twelfth aspect, the thirteenth aspect, the fourteenth aspect, the fifteenth aspect, and the implementations of the twelfth aspect, the thirteenth aspect, the fourteenth aspect, and the fifteenth aspect, refer to analysis of the beneficial effects of the eleventh aspect and the implementations of the eleventh aspect. Details are not described herein again.

According to a sixteenth aspect, a communication system is provided. The communication system includes the communication apparatus according to any one of the second aspect to the fifth aspect, the communication apparatus according to any one of the seventh aspect to the tenth aspect, and the communication apparatus according to any one of the twelfth aspect to the fifteenth aspect.

In this application, a name of the communication apparatus does not constitute any limitation on devices or functional modules. During actual implementation, these devices or the functional modules may have other names.

These aspects or other aspects in this application are more concise and comprehensible in the following descriptions.

### BRIEF DESCRIPTION OF DRAWINGS

FIG. 1 is a schematic diagram of a structure of a common communication system;
FIG. 2(a) and FIG. 2(b) are a schematic diagram of a structure of an NEDC communication system;
FIG. 3(a) and FIG. 3(b) are a schematic diagram of a structure of an NG-ENDC communication system;
FIG. 4(a) and FIG. 4(b) are a schematic diagram of a structure of a protocol stack of 5G UE according to an implementation of this application;
FIG. 5 is a schematic diagram of a hardware structure of a communication apparatus according to an implementation of this application;
FIG. 6 is a schematic flowchart 1 of a communication method according to an implementation of this application;
FIG. 7 is a schematic flowchart 2 of a communication method according to an implementation of this application;
FIG. 8 is a schematic flowchart 3 of a communication method according to an implementation of this application;
FIG. 9 is a schematic diagram 1 of a structure of a communication apparatus according to an implementation of this application;
FIG. 10 is a schematic diagram 2 of a structure of a communication apparatus according to an implementation of this application; and
FIG. 11 is a schematic diagram 3 of a structure of a communication apparatus according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those which comprise at least all the features of an independent claim. Any implementation which does not fall within the scope of the claims does not form part of the invention, but rather included as an illustrative example that is useful for understanding the invention.

In addition, in implementations of this application, the word "example" or "for example" is used to represent giving an example, an illustration, or a description. Any implementation or design scheme described as an "example" or "for example" in the implementations of this application should not be explained as being more preferred or having more advantageous than another implementation or design scheme. Exactly, use of the word "example", "for example", or the like is intended to present a related concept in a specific manner.

The following terms "first" and "second" are merely intended for a purpose of descriptions, and shall not be understood as an indication or implication of relative importance or implicit indication of a quantity of indicated technical features. Therefore, a feature limited by "first" or "second" may explicitly or implicitly include one or more features. In the descriptions of the implementations of this application, unless otherwise specified, "a plurality of" means two or more.

With development of communication technologies, an evolved node base station (evolved node base station, eNB) in a 4G network may evolve into a next generation evolved base station (next generation eNB, ng-eNB). The ng-eNB provides a radio transmission resource for a terminal by using an E-UTRA technology. The ng-eNB may provide a 5GC service for the terminal, or may provide an EPC service for the terminal. During actual deployment, the ng-eNB may be connected to only a 5GC/an EPC, or may be connected to both the 5GC and the EPC.

An access network (radio access network, RAN) in a 5G network is referred to as a next generation RAN (next generation RAN, NG-RAN), and an NG-RAN node includes the ng-eNB and a gNB (a base stations in a 5G system). The gNB provides a radio transmission resource for 5G UE by using an NR technology, and provides a 5GC service for the 5G UE. Subsequently, UE in a 4G system is referred to as 4G UE, an eNB in the 4G system is referred to as 4G eNB, and UE in the 5G system is referred to as 5G UE.

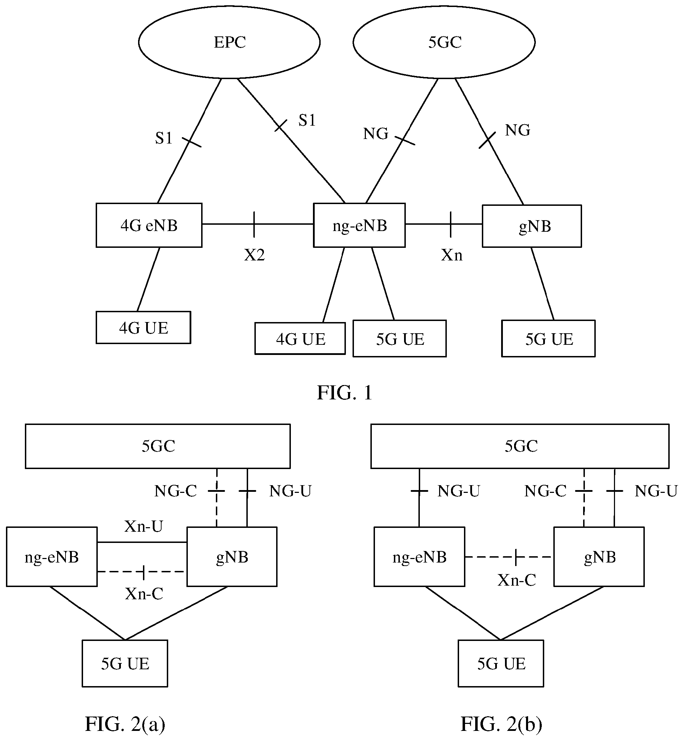

FIG. 1 shows a structure of a common communication system. As shown in FIG. 1, an ng-eNB may access an EPC through an S1 interface, and may further access a 5GC through another corresponding interface (represented by NG in FIG. 1). Correspondingly, 5G UE connected to the ng-eNB may access the 5GC through the ng-eNB, and 4G UE connected to the ng-eNB may access the EPC through the ng-eNB. A 4G eNB is connected, through an X2 interface, to the ng-eNB connected to the EPC, and the ng-eNB is connected to a gNB through an Xn interface.

During actual application, connections between the foregoing plurality of devices may be wireless connections. A solid line is used in FIG. 1 to conveniently and intuitively represent a connection relationship between devices.

It can be learned that the 5G UE may access the 5GC through the gNB, may access the 5GC through the ng-eNB, or may access the EPC through the ng-eNB.

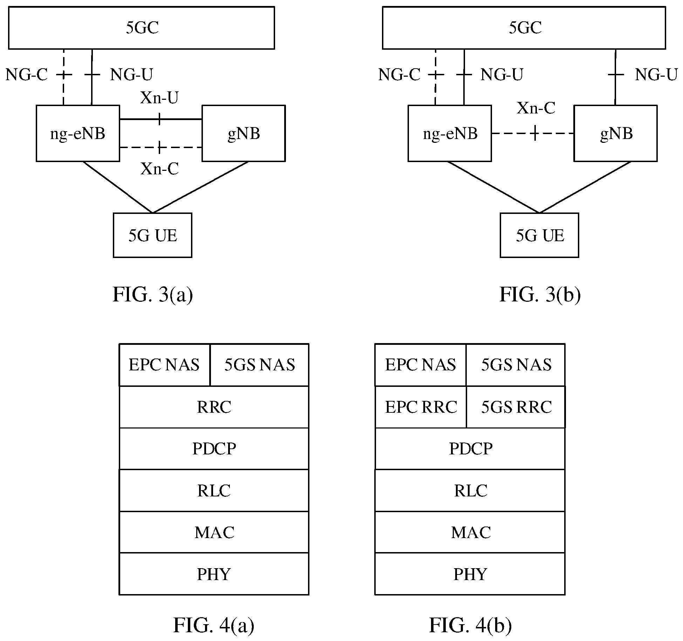

Optionally, on the basis of FIG. 1, the ng-eNB and/or the gNB may further configure a dual connectivity (dual connectivity, DC) operation for the 5G UE, and connect the 5G UE to the 5GC. For example, FIG. 2(a) and FIG. 2(b) and FIG. 3(a) and FIG. 3(b) show communication systems in which dual connectivity is performed between an ng-eNB and a gNB.

The communication system shown in FIG. 2(a) and FIG. 2(b) may be referred to as an NEDC (NR E-UTRA DC) communication system.

NEDC is also referred to as Option 4/4A. In the NEDC communication system, a gNB is a master node (master node, MN), an ng-eNB is a secondary node (secondary node, SN), and the MN is connected to a 5GC. The MN and SN provide a radio transmission resource for "data between 5G UE and the 5GC".

As shown in FIG. 2(a) and FIG. 2(b), FIG. 2(a) is a schematic diagram of a structure of an Option 4 communication system, and FIG. 2(b) is a schematic diagram of a structure of an Option 4A communication system. In the Option 4 communication system, a gNB is connected to a 5GC through NG interfaces (including an NG-C interface and an NG-U interface), and an ng-eNB is connected to the gNB through an Xn interface. The Option 4A communication system is different from the Option 4 communication system in that, an ng-eNB is further connected to the 5GC through an NG-U interface. For ease of distinguishing, in FIG. 2(a) and FIG. 2(b), control plane connections are represented by using dashed lines.

The communication system shown in FIG. 3(a) and FIG. 3(b) may be referred to as an NG-ENDC (Next Generation E-UTRA NR DC) communication system.

NG-ENDC is also referred to as Option 7/7A/7X. In the NG-ENDC communication system, an ng-eNB is an MN, a gNB is an SN, and the MN is connected to a 5GC. The MN and the SN provide a radio transmission resource for "data between a terminal and the 5GC".

As shown in FIG. 3(a) and FIG. 3(b), FIG. 3(a) is a schematic diagram of a structure of an Option 7 communication system, and FIG. 3(b) is a schematic diagram of a structure of an Option 7A communication system. In the Option 7 communication system, an ng-eNB is connected to a 5GC through NG interfaces (including an NG-C interface and an NG-U interface), and the ng-eNB is connected to a gNB through Xn interfaces. The Option 7A communication system is different from the Option 7 communication system in that, a gNB is further connected to the 5GC through an NG-U interface. For ease of distinguishing, in FIG. 3(a) and FIG. 3(b), control plane connections are represented by using dashed lines.

During actual application, there is also a dual connectivity communication system in which both the MN and the SN are gNBs. Details are not described one by one herein again.

Generally, a protocol stack of the 5G UE includes a physical layer (physical layer, PHY layer), a medium access control (media access control, MAC) layer, a radio link control (radio link control, RLC) layer, a packet data convergence protocol (packet data convergence protocol, PDCP) layer, a radio resource control (radio resource control, RRC) layer, and a non-access stratum (non-access stratum, NAS). The PHY layer, the MAC layer, the RLC layer, the PDCP layer, and the RRC layer may belong to an access stratum (access stratum, AS). The AS layer is configured to implement communication between a terminal and an access network device, and the NAS layer is configured to implement communication between the terminal and a core network device.

Optionally, the NAS layer of the 5G UE may be considered as including an EPS NAS layer corresponding to an evolved packet system (evolved packet system, EPS) and a 5GS NAS layer corresponding to a 5G system (5G system, 5GS). The EPS NAS layer may generate a NAS message used to access the EPC network, and the 5GS NAS layer may generate a NAS message used to access the 5GC. In addition, the EPS and the 5GS may share the PHY layer, the MAC layer, the RLC layer, the PDCP layer, and the RRC layer. FIG. 4(a) shows a protocol stack structure of the 5G UE.

Alternatively, the NAS layer of the 5G UE may be considered as including an EPS NAS layer corresponding to an evolved packet system (evolved packet system, EPS) and a 5GS NAS layer corresponding to a 5G system (5G system, 5GS), and the RRC layer may be considered as including an EPS RRC layer corresponding to the EPS and a 5GS RRC layer corresponding to the 5GS. For functions of the EPS NAS layer and the 5GS NAS layer, refer to the foregoing descriptions. The EPS RRC layer may generate an RRC message used to access the EPC network, and the 5GS RRC layer may generate an RRC message used to access the 5GC. In addition, the EPS and the 5GS may share the PHY layer, the MAC layer, the RLC layer, and the PDCP layer. FIG. 4(b) shows a protocol stack structure of the 5G UE.

Certainly, in addition to the protocol stack shown in FIG. 4(a) and FIG. 4(b), in the protocol stack of the 5G UE in the implementations of this application, the EPS and the 5GS may alternatively share only the PHY layer, the MAC layer, and the RLC layer, or only the PHY layer and the MAC layer, or only the PHY layer, or all protocol layers may not be shared. Details are not described herein again.

Currently, as specified in a related standard, if the 5G UE cannot perform a first service (for example, the first service is an IMS voice service) in the 5G network, the 5G UE disables an N1 mode (mode) capability of the terminal, that is, disables a capability of accessing the 5GC by the terminal. That the 5G UE cannot perform the first service in the 5G network may mean that the 5G network does not support the first service, or the 5G UE does not support performing of the first service in the 5G network.

A specific behavior in which the 5G UE disables the N1 mode capability is that the 5G UE accesses the EPC. To avoid handing over/redirecting the terminal to the 5GC, an access network device in the 4G network needs to learn that the terminal has disabled the N1 mode capability. However, currently, there is no method for how the access network device learns that the terminal has disabled the N1 mode capability.

Therefore, the implementations of this application provide a communication method and apparatus. After disabling a capability of accessing a first network, the terminal receives a wireless capability obtaining message from an access network device of a second network, where the wireless capability obtaining message is used to request to obtain a wireless capability of the terminal. Correspondingly, the terminal sends, to the access network device of the second network, a first notification message used to indicate that the terminal does not support access to the first network. In this way, the access network device of the second network can learn that the terminal has disabled access to the first network. It can be learned that, according to the communication method provided in the implementations of this application, the access network device can learn that the terminal has disabled access to the first network.

Optionally, if the first network is a 5G network, and the second network is a 4G network, in the communication method provided in the implementations of this application, the access network device of the 4G network can learn that the terminal has disabled the N1 mode capability.

If the first network is a 4G network, and the second network is a 5G network, in the communication method provided in the implementations of this application, the access network device of the 5G network can learn that the terminal has disabled an S1 mode capability. The S1 mode capability of the terminal refers to a capability of the terminal to access an EPC.

Terminals in the implementations of this application all represent 5G UEs. Details are not described one by one below again.

The communication method provided in the implementations of this application is applicable to the communication system shown in FIG. 1, applicable to a communication system combined with FIG. 1 and FIG. 2(a) and FIG. 2(b), or applicable to a communication system combined with FIG. 1 and FIG. 3(a) and FIG. 3(b).

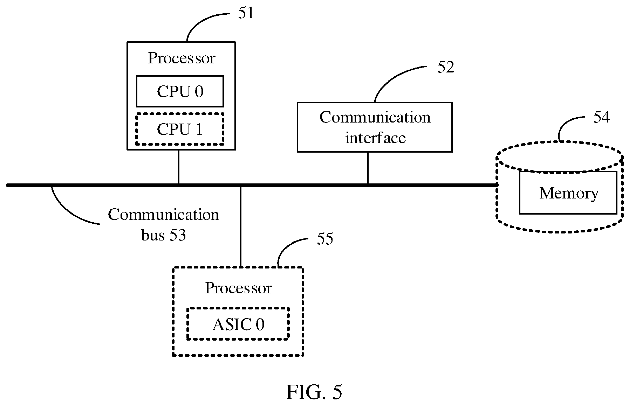

Each device in FIG. 1 to FIG. 3(a) and FIG. 3(b) belongs to the communication apparatus. During specific implementation, the communication apparatus has components shown in FIG. 5. FIG. 5 is a schematic composition diagram of a communication apparatus according to an implementation of this application. As shown in FIG. 5, the communication apparatus may include a processor 51, a communication interface 52, and a communication bus 53. The following describes each component of the communication apparatus in detail with reference to FIG. 5.

The processor 51 is a control center of the communication apparatus, and may be one processor or may be a collective term of a plurality of processing elements. For example, the processor 51 may be a central processing unit (central processing unit, CPU), an application-specific integrated circuit (application-specific integrated circuit, ASIC), or one or more integrated circuits, for example, one or more microprocessors (digital signal processor, DSP) or one or more field programmable gate arrays (field-programmable gate array, FPGA), configured to implement this implementation of this application.

In an implementation, the processor 51 may include one or more CPUs, for example, a CPU 0 and a CPU 1 shown in FIG. 5.

In an implementation, the communication apparatus may alternatively include another processor, for example, a processor 55 shown in FIG. 5. Each of a plurality of processors in the communication apparatus may be a single-core processor (single-CPU), or may be a multi-core processor (multi-CPU). The processor herein may refer to one or more devices, circuits, and/or processing cores configured to process data (for example, computer program instructions).

The communication interface 52 is configured to communicate with another device or a communication network under control of the processor 51, for example, configured to communicate with a communication network such as an Ethernet, a radio access network (radio access network, RAN), or a wireless local area network (wireless local area networks, WLAN). The communication interface 52 may include all or a part of a baseband processor, and may further optionally include a radio frequency (radio frequency, RF) processor. The RF processor is configured to send and receive an RF signal. The baseband processor is configured to process a baseband signal converted from the RF signal or a baseband signal to be converted into the RF signal.

The communication bus 53 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like. The communication bus may be classified into an address bus, a data bus, a control bus, and the like. For ease of representation, only one thick line is used to represent the bus in FIG. 5, but this does not mean that there is only one bus or only one type of bus.

Optionally, the communication apparatus further includes a memory 54.

The memory 54 may be configured to store a software program for executing the solutions of this application, and the software program includes program instructions. The processor 51 may run or execute the software program stored in the memory 54 and invoke data stored in the memory 54, to perform various functions of the communication apparatus.

The memory 54 may be a read-only memory (read-only memory, ROM) or another type of static storage device capable of storing static information and instructions, or a random access memory (random access memory, RAM) or another type of dynamic storage device capable of storing information and instructions; may be an electrically erasable programmable read-only memory (electrically erasable programmable read-only memory, EEPROM), a magnetic disk storage medium or another magnetic storage device, or any other medium capable of carrying or storing expected program code in a form of instructions or a data structure and capable of being accessed by a computer. However, this is not limited thereto. The memory 54 may exist independently, and is connected to the processor 51 through the communication bus 53. The memory 54 may alternatively be integrated with the processor 51.

Because the memory 54 is an optional component, the memory 54 is represented by a dashed-line box in FIG. 5.

It should be noted that a device structure shown in FIG. 5 does not constitute a limitation on the communication apparatus. In addition to the components shown in FIG. 5, the communication apparatus may include more or fewer components than those shown in the figure, or combine some components, or have different component arrangements.

With reference to the communication systems shown in FIG. 1 to FIG. 3(a) and FIG. 3(b) and the communication apparatus shown in FIG. 5, the following describes communication methods according to the implementations of this application. Each device in the following method implementations may have components shown in FIG. 5, and details are not described again.

For ease of understanding of the implementations of this application, an example in which the terminal has a capability of supporting access to the first network and the second network, and the terminal has accessed the first network is used for description.

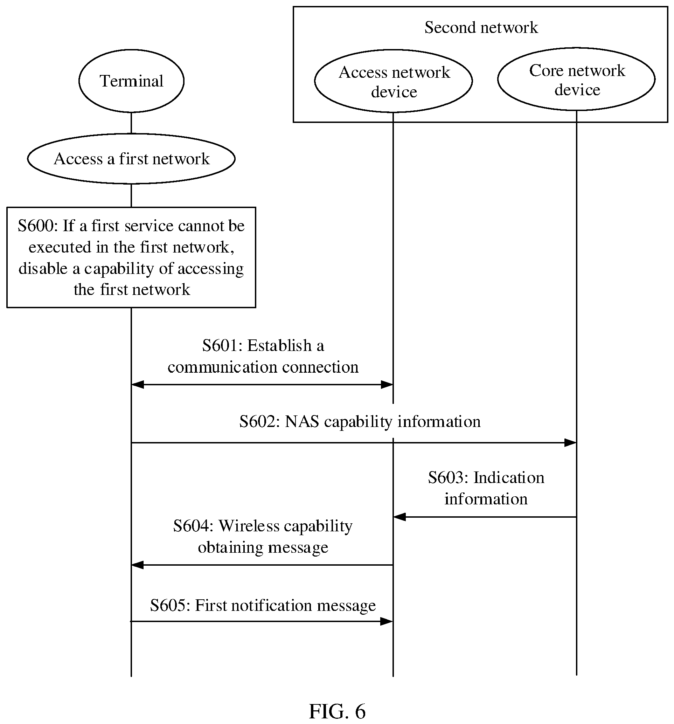

FIG. 6 is a schematic flowchart of a communication method according to an implementation of this application. Referring to FIG. 6, the communication method includes the following steps.

S600: If a first service cannot be executed in a first network, a terminal disables a capability of accessing the first network.

The terminal has a capability of accessing the first network and a second network. In a scenario in which the terminal accesses the first network, the capability of the terminal to access the first network is in an enabled state.

In a running process, if the terminal needs to perform the first service, and the terminal cannot perform the first service in the first network, the terminal disables the capability of accessing the first network.

Optionally, that the terminal cannot perform the first service in the first network means that the first network does not support the first service, or the terminal cannot perform the first service in the first network.

Specifically, when the terminal disables the capability of accessing the first network, a NAS layer of the terminal sends a message 1 to an AS layer of the terminal, where the message 1 is used to indicate that the terminal has disabled the capability of accessing the first network. In this way, the AS layer of the terminal determines that wireless capability information of the terminal does not include first wireless capability information.

The first wireless capability information includes at least one of information used to indicate a radio capability of the terminal to access the first network, information used to indicate a capability of the terminal to hand over from the second network to the first network, information used to indicate a capability of the terminal to redirect (redirect) from the second network to the first network, or information used to indicate a capability of the terminal to access the first network through dual connectivity.

"The terminal accesses the first network through dual connectivity" means that an access network device that provides a service for the terminal includes a master node and a secondary node connected to the master node, and the master node is connected to a core network device. For example, if the first network is a 5G network, FIG. 2(a) and FIG. 2(b) or FIG. 3(a) and FIG. 3(b) show that 5G UE accesses the 5G network through dual connectivity.

If the first network is the 5G network, the radio capability of the terminal to access the first network includes a capability of the terminal to support access to a 5G core network through E-UTRA, and a capability of the terminal to support access to the 5G core network through NR.

For example, if the first network is the 5G network, the AS layer of the terminal determines that the wireless capability information of the terminal does not include at least one of the following information: information used to indicate the capability of the terminal to access the 5GC by using the E-UTRA technology, information used to indicate the capability of the terminal to access the 5GC by using the NR technology, or information used to indicate Option 7.

The AS layer of the terminal may determine that the wireless capability information of the terminal does not include the first wireless capability information in a plurality of manners. In a possible implementation, the AS layer of the terminal deletes the first wireless capability information from the wireless capability information of the terminal. In another possible implementation, the AS layer of the terminal sets the first wireless capability information to be invalid. It can be learned that after the terminal disables the capability of accessing the first network, the wireless capability information of the terminal changes.

S601: The terminal requests to be access the second network, and establishes a communication connection to an access network device of the second network.

If the terminal can perform the first service in the second network, the terminal requests to access the second network after disabling access to the first network. For a procedure in which the terminal requests to access the second network, refer to a process in which the terminal requests to access a network in a conventional technology. Details are not described herein.

In the procedure in which the terminal requests to access the second network, the terminal may first establish the communication connection to the access network device of the second network.

S602: The terminal sends, to a core network device of the second network, NAS capability information used to indicate that the terminal has disabled the capability of accessing the first network.

For example, the core network device of the second network is a mobility management entity (mobility management entity, MME).

Optionally, the NAS capability information is carried in a tracking area update (tracking area update, TAU) request message, or is carried in an initial UE message (initial UE message).

Optionally, the terminal further sends first information to the core network device of the second network, where the first information is used to indicate that a wireless capability of the terminal changes.

If the core network device of the second network has stored the wireless capability information of the terminal, for example, the first wireless capability information and second wireless capability information that is used to indicate that the terminal supports access to the second network, the core network device of the second network deletes the first wireless capability information and the second wireless capability information after receiving the first information.

S603: The core network device of the second network sends indication information to the access network device of the second network.

The indication information is used to indicate to obtain the wireless capability of the terminal, or is used to indicate that the access network device of the second network cannot connect the terminal to the first network.

Optionally, the indication information may be represented directly (that is, explicitly), or may be represented indirectly (that is, implicitly). For example, if the information sent by the core network device of the second network to the access network device of the second network does not include the first wireless capability information, it indicates that the access network device of the second network cannot connect the terminal to the first network.

Optionally, the indication information is carried in an initial context setup request (initial context setup request) message.

S604: The access network device of the second network sends a wireless capability obtaining message to the terminal based on the indication information.

The wireless capability obtaining message is used to request to obtain the wireless capability of the terminal.

If the indication information is used to indicate to obtain the wireless capability of the terminal, after receiving the indication information, the access network device of the second network may directly send the wireless capability obtaining message to the terminal based on the indication information, to request to obtain the wireless capability of the terminal.

If the indication information is used to indicate that the access network device of the second network cannot connect the terminal to the first network, the access network device of the second network still needs to obtain the wireless capability of the terminal, to establish a context of the terminal, and further complete the procedure in which the terminal accesses the second network.

Optionally, the wireless capability obtaining message is a UE capability enquiry (UE capability enquiry) message.

S605: The terminal sends, to the access network device of the second network, a first notification message used to indicate that the terminal does not support access to the first network.

The first notification message does not include the first wireless capability information.

It can be learned that, under a function of mutual communication between the terminal, the access network device of the second network, and the core network device of the second network, the access network device of the second network may learn that the terminal has disabled access to the first network.

Further, in a scenario in which the terminal has disabled access to the first network and has accessed the second network, if the access network device of the second network determines to hand over the terminal to a target device, the access network device of the second network further needs to send, to the target device, handover indication information used to indicate that the terminal does not support access to the first network, to help the target device determine not to connect the terminal to the first network.

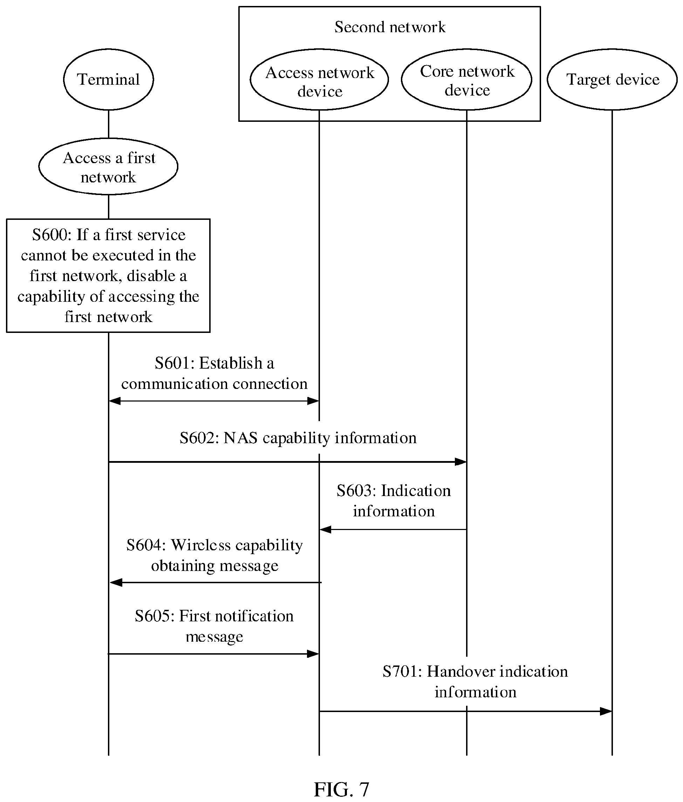

With reference to FIG. 6, as shown in FIG. 7, the communication method provided in this implementation of this application further includes S701 after S605.

S701: The access network device of the second network sends the handover indication information to the target device, where the handover indication information is used to indicate that the terminal does not support access to the first network.

During actual application, according to a service requirement, in a scenario in which the terminal accesses the second network, the terminal may further reenable the capability of accessing the first network. In this case, the terminal further sends a second notification message to the access network device of the second network, to indicate that the terminal supports access to the first network. In this way, the access network device of the second network may subsequently hand over the terminal to the first network according to the requirement.

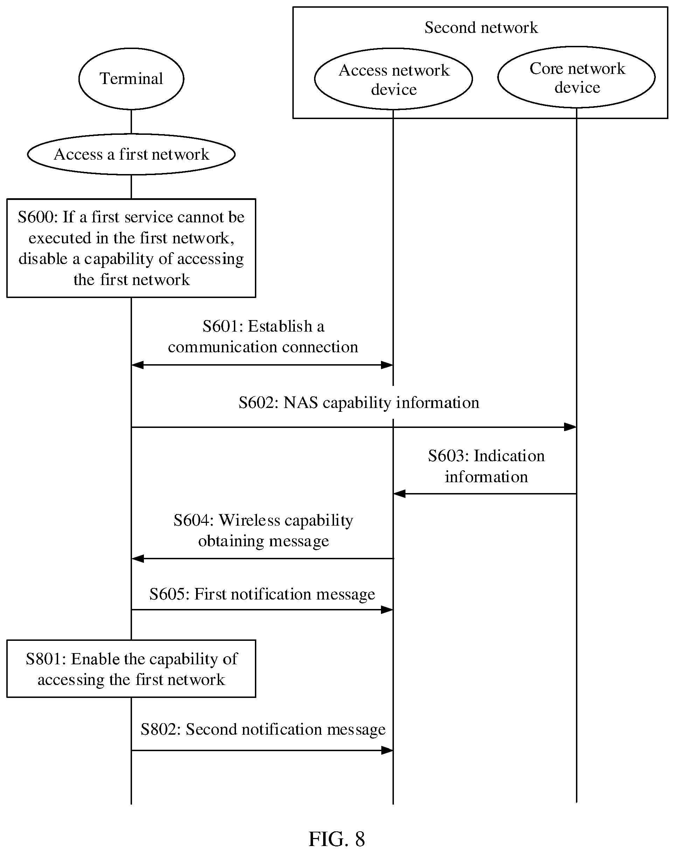

With reference to FIG. 6, as shown in FIG. 8, the communication method provided in this implementation of this application further includes S801 and S802 after S605.

S801: The terminal enables the capability of accessing the first network.

S802: The terminal sends the second notification message to the access network device of the second network, where the second notification message is used to indicate that the terminal supports access to the first network.

The second notification message includes the first wireless capability information.

In conclusion, this implementation of this application provides the method for the access network device to learn that the terminal disables access to the first network, and further provides the method for the access network device to learn that the terminal reenables access to the first network.

An implementation of this application provides a communication apparatus 9. The communication apparatus 9 may be a terminal, or may be an apparatus as a part in the terminal, for example, a chip system in the terminal. Optionally, the chip system is configured to support the terminal in implementing functions in the foregoing method implementations, for example, receiving, sending, or processing data and/or information in the foregoing methods. The chip system includes a chip, and may also include another discrete component or circuit structure.

The communication apparatus 9 is configured to perform steps performed by the terminal in the method shown in any one of FIG. 6 to FIG. 8. The communication apparatus 9 provided in this implementation of this application may include modules corresponding to corresponding steps.

In this implementation of this application, the communication apparatus 9 may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. In this implementation of this application, division into the modules is an example, is merely logical function division, and may be other division during actual implementation.

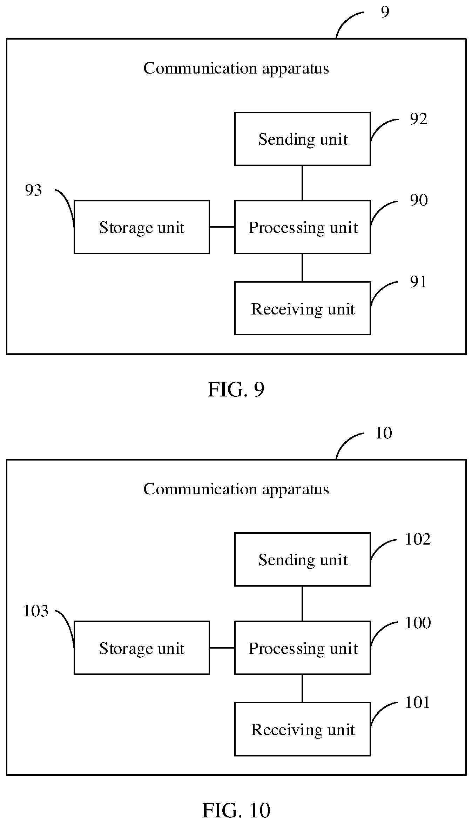

When each functional module is obtained through division based on each corresponding function, FIG. 9 is a possible schematic diagram of a structure of the communication apparatus 9 in this implementation of this application. As shown in FIG. 9, the communication apparatus 9 includes a processing unit 90, a receiving unit 91, and a sending unit 92.

The processing unit 90 is configured to support the communication apparatus 9 in performing an enabling operation and a disabling operation, for example, S600 or S801, shown in any one of FIG. 6 to FIG. 8, and/or configured to perform another process of the technology described in this specification.

The receiving unit 91 is configured to support the communication apparatus 9 in performing a receiving operation, for example, S604, shown in any one of FIG. 6 to FIG. 8, and/or configured to perform another process of the technology described in this specification.

The sending unit 92 is configured to support the communication apparatus 9 in performing a sending operation, for example, S602, S605, or S802, shown in any one of FIG. 6 to FIG. 8, and/or configured to perform another process of the technology described in this specification.

All related content of the steps in the foregoing method implementations may be cited in function descriptions of the corresponding functional modules. Details are not described herein again.

Certainly, the communication apparatus 9 provided in this implementation of this application includes but is not limited to the foregoing modules. For example, the communication apparatus 9 may further include a storage unit 93.

The storage unit 93 may be configured to store program code of the communication apparatus 9.

For an entity block diagram of the communication apparatus 9 provided in this application, refer to FIG. 5. The processing unit 90 may be the processor 51 in FIG. 5, the receiving unit 91 and the sending unit 92 may be the communication interface 52 in FIG. 5, and the storage unit 93 may be the memory 54 in FIG. 5.

Another implementation of this application further provides a computer-readable storage medium. The computer-readable storage medium stores instructions. When the instructions are run on a communication apparatus 9, the communication apparatus 9 performs steps of the terminal in the communication method in the implementation shown in any one of FIG. 6 to FIG. 8.

In another implementation of this application, a computer program product is further provided. The computer program product includes computer-executable instructions, and the computer-executable instructions are stored in a computer-readable storage medium. A processor of a communication apparatus 9 may read the computer executable instructions from the computer-readable storage medium, and the processor executes the computer-executable instructions, so that the communication apparatus 9 performs steps of the terminal in the communication method in the implementation shown in any one of FIG. 6 to FIG. 8.

An implementation of this application provides a communication apparatus 10. The communication apparatus 10 may be a core network device, or may be an apparatus as a part in the core network device, for example, a chip system in the core network device. Optionally, the chip system is configured to support the core network device in implementing functions in the foregoing method implementations, for example, receiving, sending, or processing data and/or information in the foregoing methods. The chip system includes a chip, and may also include another discrete component or circuit structure.

The communication apparatus 10 is configured to perform steps performed by the core network device of the second network in the method shown in any one of FIG. 6 to FIG. 8. The communication apparatus 10 provided in this implementation of this application may include modules corresponding to corresponding steps.

In this implementation of this application, the communication apparatus 10 may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. In this implementation of this application, division into the modules is an example, is merely logical function division, and may be other division during actual implementation.

When each functional module is obtained through division based on each corresponding function, FIG. 10 is a possible schematic diagram of a structure of the communication apparatus 10 in this implementation of this application. As shown in FIG. 10, the communication apparatus 10 includes a processing unit 100, a receiving unit 101, and a sending unit 102.

The processing unit 100 is configured to support the communication apparatus 10 in deleting the first wireless capability information, the second wireless capability information, and the like, and/or configured to perform another process of the technology described in this specification.

The receiving unit 101 is configured to support the communication apparatus 10 in performing a receiving operation, for example, S602, shown in any one of FIG. 6 to FIG. 8, and/or configured to perform another process of the technology described in this specification.

The sending unit 102 is configured to support the communication apparatus 10 in performing a sending operation, for example, S603, shown in any one of FIG. 6 to FIG. 8, and/or configured to perform another process of the technology described in this specification.

All related content of the steps in the foregoing method implementations may be cited in function descriptions of the corresponding functional modules. Details are not described herein again.

Certainly, the communication apparatus 10 provided in this implementation of this application includes but is not limited to the foregoing modules. For example, the communication apparatus 10 may further include a storage unit 103.

The storage unit 103 may be configured to store program code of the communication apparatus 10.

For an entity block diagram of the communication apparatus 10 provided in this application, refer to FIG. 5. The processing unit 100 may be the processor 51 in FIG. 5, the receiving unit 101 and the sending unit 102 may be the communication interface 52 in FIG. 5, and the storage unit 103 may be the memory 54 in FIG. 5.

Another implementation of this application further provides a computer-readable storage medium. The computer-readable storage medium stores instructions. When the instructions are run on a communication apparatus 10, the communication apparatus 10 performs steps of the core network device of the second network in the communication method in the implementation shown in any one of FIG. 6 to FIG. 8.

In another implementation of this application, a computer program product is further provided. The computer program product includes computer-executable instructions, and the computer-executable instructions are stored in a computer-readable storage medium. A processor of a communication apparatus 10 may read the computer executable instructions from the computer-readable storage medium, and the processor executes the computer-executable instructions, so that the communication apparatus 10 performs steps of the core network device of the second network in the communication method in the implementation shown in any one of FIG. 6 to FIG. 8.

An implementation of this application provides a communication apparatus 11. The communication apparatus 11 may be an access network device, or may be an apparatus as a part in the access network device, for example, a chip system in the access network device. Optionally, the chip system is configured to support the access network device in implementing functions in the foregoing method implementations, for example, receiving, sending, or processing data and/or information in the foregoing methods. The chip system includes a chip, and may also include another discrete component or circuit structure.

The communication apparatus 11 is configured to perform steps performed by the access network device of the second network in the method shown in any one of FIG. 6 to FIG. 8. The communication apparatus 11 provided in this implementation of this application may include modules corresponding to corresponding steps.

In this implementation of this application, the communication apparatus 11 may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. In this implementation of this application, division into the modules is an example, is merely logical function division, and may be other division during actual implementation.

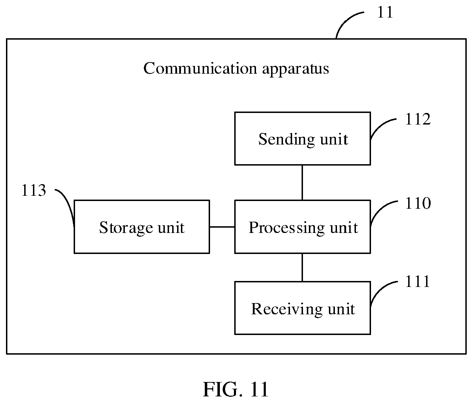

When each functional module is obtained through division based on each corresponding function, FIG. 11 is a possible schematic diagram of a structure of the communication apparatus 11 in this implementation of this application. As shown in FIG. 11, the communication apparatus 11 includes a processing unit 110, a receiving unit 111, and a sending unit 112.

The processing unit 110 is configured to support the communication apparatus 11 in completing the communication connection to the terminal, and/or configured to perform in another process of the technology described in this specification.

The receiving unit 111 is configured to support the communication apparatus 11 in performing a receiving operation, for example, S603, S605, or S802, shown in any one of FIG. 6 to FIG. 8, and/or configured to perform another process of the technology described in this specification.

The sending unit 112 is configured to support the communication apparatus 11 in performing a sending operation, for example, S604 or S701, shown in any one of FIG. 6 to FIG. 8, and/or configured to perform another process of the technology described in this specification.

All related content of the steps in the foregoing method implementations may be cited in function descriptions of the corresponding functional modules. Details are not described herein again.

Certainly, the communication apparatus 11 provided in this implementation of this application includes but is not limited to the foregoing modules. For example, the communication apparatus 11 may further include a storage unit 113.

The storage unit 113 may be configured to store program code of the communication apparatus 11.

For an entity block diagram of the communication apparatus 11 provided in this application, refer to FIG. 5. The processing unit 110 may be the processor 51 in FIG. 5, the receiving unit 111 and the sending unit 112 may be the communication interface 52 in FIG. 5, and the storage unit 113 may be the memory 54 in FIG. 5.

Another implementation of this application further provides a computer-readable storage medium. The computer-readable storage medium stores instructions. When the instructions are run on a communication apparatus 11, the communication apparatus 11 performs steps of the access network device of the second network in the communication method in the implementation shown in any one of FIG. 6 to FIG. 8.

In another implementation of this application, a computer program product is further provided. The computer program product includes computer-executable instructions, and the computer-executable instructions are stored in a computer-readable storage medium. A processor of a communication apparatus 11 may read the computer executable instructions from the computer-readable storage medium, and the processor executes the computer-executable instructions, so that the communication apparatus 11 performs steps of the access network device of the second network in the communication method in the implementation shown in any one of FIG. 6 to FIG. 8.

All or some of the foregoing implementations may be implemented by using software, hardware, firmware, or any combination thereof. When a software program is used to implement the implementations, all or some of the implementations may be implemented in a form of a computer program product. The computer program product includes one or more computer instructions. When the computer program instructions are loaded and executed on a computer, the procedure or functions according to the implementations of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data first access network device such as a server or a data center, integrating one or more usable media. The usable medium may be a magnetic medium (for example, a floppy disk, a hard disk, or a magnetic tape), a semiconductor medium (for example, a solid-state drive (SSD)), or the like.

Based on the foregoing descriptions of the implementations, a person skilled in the art may clearly understand that for the purpose of convenient and brief descriptions, division into the foregoing functional modules is merely used as an example for illustration. During actual application, the foregoing functions can be allocated to different functional modules for implementation based on a requirement, that is, an inner structure of an apparatus is divided into different functional modules to implement all or some of the functions described above.

In the several implementations provided in this application, it should be understood that the disclosed apparatus and method may be implemented in another manner. For example, the described apparatus implementations are merely examples. For example, division into the modules or units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, and may be located in one place, or may be distributed in different places. Some or all of the units may be selected based on actual requirements to achieve the objectives of the solutions of the implementations.

In addition, functional units in the implementations of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the implementations of this application essentially, or the part contributing to a conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in the implementations of this application. The storage medium includes any medium such as a USB flash drive, a removable hard disk, a read-only memory (read-only memory, ROM), a random access memory (random access memory, RAM), a magnetic disk, or an optical disc, that can store program code.

The scope of protection shall be defined by the appended claims.

## Claims

1. A communication method, comprising:
disabling (S600), by a terminal, a capability of accessing a first network;
receiving (S604), by the terminal, a wireless capability obtaining message from an access network device of a second network, wherein the wireless capability obtaining message is used to request to obtain a wireless capability of the terminal; and
sending (S605), by the terminal, a first notification message to the access network device of the second network, wherein the first notification message is used to indicate that the terminal does not support access to the first network;
the first notification message does not comprise first wireless capability information, wherein the first wireless capability information is used to indicate that the terminal supports access to the first network,
and the first wireless capability information comprises at least one of information used to indicate a radio capability of the terminal to access the first network, information used to indicate a capability of the terminal to hand over from the second network to the first network, information used to indicate a capability of the terminal to redirect from the second network to the first network, or information used to indicate a capability of the terminal to access the first network through dual connectivity.

2. The communication method according to claim 1, wherein the communication method further comprises:
sending, by the terminal, first information to a core network device of the second network, wherein the first information is used to indicate that the wireless capability of the terminal changes.

3. The communication method according to claim 1 or 2, wherein the communication method further comprises:
enabling, by the terminal, the capability of accessing the first network; and
sending, by the terminal, a second notification message to the access network device of the second network, wherein the second notification message is used to indicate that the terminal supports access to the first network.

4. The communication method according to any one of claims 1 to 3, wherein
if the first network is a 5th generation communication technology 5G network, the radio capability of the terminal to access the first network comprises a capability of the terminal to support access to a 5G core network through evolved universal terrestrial radio access E-UTRA, and a capability of the terminal to support access to the 5G core network through new radio NR.

5. The communication method according to claim 1 further comprising:
sending (S602), by the terminal, non-access NAS capability information to a core network device of the second network, wherein the NAS capability information is used to indicate that the terminal has disabled a capability of accessing the first network so as to cause the core network device of the second network to:
send indication information to the access network device of the second network, wherein the indication information is used to indicate to the access network device of the second network to
obtain the wireless capability of the terminal, or is used to indicate that the access network device of the second network cannot connect the terminal to the first network.

6. The communication method according to claim 5, wherein before the core network device of the second network sends the indication information to the access network device of the second network, the communication method further comprises:
sending, by the terminal, first information to the core network device of the second network, wherein the first information is used to indicate that the wireless capability of the terminal changes so as to cause the core network device to:
delete the first wireless capability information and second wireless capability information based on the first information, wherein the first wireless capability information is used to indicate that the terminal supports access to the first network, and the second wireless capability information is used to indicate that the terminal supports access to the second network;
preferably wherein:
the second wireless capability information comprises at least one of information used to indicate a radio capability of the terminal to access the second network, information used to indicate a capability of the terminal to hand over from the first network to the second network, information used to indicate a capability of the terminal to redirect from the first network to the second network, or information used to indicate a capability of the terminal to access the second network through dual connectivity;
preferably wherein:
if the first network is a 5th generation communication technology 5G network, the terminal supports a capability of accessing a 5G core network through evolved universal terrestrial radio access E-UTRA, and the terminal supports a capability of accessing the 5G core network through new radio NR; and
if the second network is a 5th generation communication technology 5G network, the terminal supports a capability of accessing a 5G core network through evolved universal terrestrial radio access E-UTRA, and the terminal supports a capability of accessing the 5G core network through new radio NR.

7. A communication method, comprising:
sending (S604), by an access network device of a second network, a wireless capability obtaining message to a terminal, wherein the wireless capability obtaining message is used to request to obtain a wireless capability of the terminal; and
receiving (S605), by the access network device of the second network, a first notification message from the terminal, wherein the first notification message is used to indicate that the terminal does not support access to a first network;
wherein:
the first notification message does not comprise first wireless capability information, wherein the first wireless capability information is used to indicate that the terminal supports access to the first network,
and the first wireless capability information comprises at least one of information used to indicate a radio capability of the terminal to access the first network, information used to indicate a capability of the terminal to hand over from the second network to the first network, information used to indicate a capability of the terminal to redirect from the second network to the first network, or information used to indicate a capability of the terminal to access the first network through dual connectivity.

8. The communication method according to claim 7, wherein the communication method further comprises:
sending, by the access network device of the second network, handover indication information to a target device, wherein the handover indication information is used to indicate that the terminal does not support access to the first network.

9. The communication method according to claim 7 or 8, wherein before the sending, by an access network device of a second network, a wireless capability obtaining message to a terminal, the communication method further comprises:
establishing, by the access network device of the second network, a communication connection to the terminal; and
receiving, by the access network device of the second network, indication information from a core network device of the second network, wherein the indication information is used to indicate to obtain the wireless capability of the terminal, or is used to indicate that the access network device of the second network cannot connect the terminal to the first network, and/or wherein the communication method further comprises:
receiving, by the access network device of the second network, a second notification message from the terminal, wherein the second notification message is used to indicate that the terminal supports access to the first network.

10. The communication method according to any one of claims 7 to 9, wherein
if the first network is a 5th generation communication technology 5G network, the radio capability of the terminal to access the first network comprises a capability of the terminal to support access to a 5G core network through evolved universal terrestrial radio access E-UTRA, and a capability of the terminal to support access to the 5G core network through new radio NR.

11. A terminal, wherein the terminal comprises a processor, and the processor is coupled to a memory, and reads and executes instructions in the memory, to implement the steps performed by the terminal according to any one of claims 1 to 6.

12. An access network device, wherein the access network device comprises a processor, and the processor is configured to be coupled to a memory, and reads and executes instructions in the memory, to implement the steps performed by the access network device according to any one of claims 7 to 10.

13. A communication system, wherein the communication system comprises the terminal according to claim 11, and the access network device according to claim 12.

14. A computer-readable storage medium, comprising:
a first set of instructions, which when executed by a terminal, cause the terminal to implement the steps performed by the terminal according to any one of claims 1 to 6; or
a second set of instructions, which when executed by an access network device, cause the access network device to implement the steps performed by the access network device according to any one of claims 7 to 10.

## Patentansprüche

1. Kommunikationsverfahren, umfassend:
Deaktivieren (S600), durch ein Endgerät, einer Fähigkeit zum Zugang zu einem ersten Netzwerk;
Empfangen (S604), durch das Endgerät, einer Erlangungsnachricht zur drahtlosen Fähigkeit von einer Zugangsnetzwerkvorrichtung eines zweiten Netzwerks, wobei die Erlangungsnachricht zur drahtlosen Fähigkeit dazu verwendet wird, anzufordern, eine drahtlose Fähigkeit des Endgeräts zu erlangen; und
Senden (S605), durch das Endgerät, einer ersten Benachrichtigungsnachricht an die Zugangsnetzwerkvorrichtung des zweiten Netzwerks, wobei die erste Benachrichtigungsnachricht dazu verwendet wird, anzugeben, dass das Endgerät einen Zugang zu dem ersten Netzwerk nicht unterstützt;
die erste Benachrichtigungsnachricht keine ersten Informationen zur drahtlosen Fähigkeit umfasst, wobei die ersten Informationen zur drahtlosen Fähigkeit dazu verwendet werden, anzugeben, dass das Endgerät den Zugang zu dem ersten Netzwerk unterstützt, und die ersten Informationen zur drahtlosen Fähigkeit mindestens eines aus Informationen, die dazu verwendet werden, eine Funkfähigkeit des Endgeräts anzugeben, um Zugang zu dem ersten Netzwerk zu erhalten, Informationen, die dazu verwendet werden, eine Fähigkeit des Endgeräts anzugeben, von dem zweiten Netzwerk an das erste Netzwerk zu übergeben, Informationen, die dazu verwendet werden, eine Fähigkeit des Endgeräts anzugeben, von dem zweiten Netzwerk zu dem ersten Netzwerk umzuleiten, oder Informationen, die dazu verwendet werden, eine Fähigkeit des Endgeräts anzugeben, Zugang zu dem ersten Netzwerk über duale Konnektivität zu erhalten, umfassen.

2. Kommunikationsverfahren nach Anspruch 1, wobei das Kommunikationsverfahren ferner Folgendes umfasst:
Senden, durch das Endgerät, erster Informationen an eine Kernnetzwerkvorrichtung des zweiten Netzwerks, wobei die ersten Informationen dazu verwendet werden, anzugeben, dass sich die drahtlose Fähigkeit des Endgeräts ändert.

3. Kommunikationsverfahren nach Anspruch 1 oder 2, wobei das Kommunikationsverfahren ferner Folgendes umfasst:
Ermöglichen, durch das Endgerät, der Fähigkeit zum Zugang zu dem ersten Netzwerk; und
Senden, durch das Endgerät, einer zweiten Benachrichtigungsnachricht an die Zugangsnetzwerkvorrichtung des zweiten Netzwerks, wobei die zweite Benachrichtigungsnachricht dazu verwendet wird, anzugeben, dass das Endgerät einen Zugang zu dem ersten Netzwerk unterstützt.

4. Kommunikationsverfahren nach einem der Ansprüche 1 bis 3, wobei
wenn das erste Netzwerk ein Netzwerk mit Kommunikationstechnologie der 5. Generation, 5G-Netzwerk, ist, die Funkfähigkeit des Endgeräts, um Zugang zu dem ersten Netzwerk zu erhalten, eine Fähigkeit des Endgeräts, einen Zugang zu einem 5G-Kernnetzwerk über einen weiterentwickelten universellen terrestrischen Funkzugang, E-UTRA, zu unterstützen, und eine Fähigkeit des Endgeräts, einen Zugang zu dem 5G-Kernnetzwerk über neues Radio, NR, zu unterstützen, umfasst.

5. Kommunikationsverfahren nach Anspruch 1, ferner umfassend:
Senden (S602), durch das Endgerät, von Nichtzugangs-Fähigkeitsinformationen, NAS-Fähigkeitsinformationen, an eine Kernnetzwerkvorrichtung des zweiten Netzwerks, wobei die NAS-Fähigkeitsinformationen dazu verwendet werden, anzugeben, dass das Endgerät eine Fähigkeit zum Zugang zu dem ersten Netzwerk deaktiviert hat, um die Kernnetzwerkvorrichtung des zweiten Netzwerks zu Folgendem zu veranlassen:
Senden von Angabeinformationen an die Zugangsnetzwerkvorrichtung des zweiten Netzwerks, wobei die Angabeinformationen dazu verwendet werden, der Zugangsnetzwerkvorrichtung des zweiten Netzwerks anzugeben, die drahtlose Fähigkeit des Endgeräts zu erlangen oder dazu verwendet werden, anzugeben, dass die Zugangsnetzwerkvorrichtung des zweiten Netzwerks das Endgerät nicht mit dem ersten Netzwerk verbinden kann.

6. Kommunikationsverfahren nach Anspruch 5, wobei, bevor die Kernnetzwerkvorrichtung des zweiten Netzwerks die Angabeinformationen an die Zugangsnetzwerkvorrichtung des zweiten Netzwerks sendet, das Kommunikationsverfahren ferner Folgendes umfasst:
Senden, durch das Endgerät, erster Informationen an die Kernnetzwerkvorrichtung des zweiten Netzwerks, wobei die ersten Informationen dazu verwendet werden, anzugeben, dass sich die drahtlose Fähigkeit des Endgeräts ändert, sodass die Kernnetzwerkvorrichtung zu Folgendem veranlasst wird:
Löschen der ersten Informationen zur drahtlosen Fähigkeit und der zweiten Informationen zur drahtlosen Fähigkeit basierend auf den ersten Informationen, wobei die ersten Informationen zur drahtlosen Fähigkeit dazu verwendet werden, anzugeben dass das Endgerät einen Zugang zu dem ersten Netzwerk unterstützt, und die zweiten Informationen zur drahtlosen Fähigkeit dazu verwendet werden, anzugeben, dass das Endgerät einen Zugang zu dem zweiten Netzwerk unterstützt;
vorzugsweise wobei:
die zweiten Informationen zur drahtlosen Fähigkeit mindestens eines aus Informationen, die dazu verwendet werden, eine Funkfähigkeit des Endgeräts anzugeben, um Zugang zu dem zweiten Netzwerk zu erhalten, Informationen, die dazu verwendet werden, eine Fähigkeit des Endgeräts anzugeben, von dem ersten Netzwerk an das zweite Netzwerk zu übergeben, Informationen, die dazu verwendet werden, eine Fähigkeit des Endgeräts anzugeben, von dem ersten Netzwerk zu dem zweiten Netzwerk umzuleiten, oder Informationen, die dazu verwendet werden, eine Fähigkeit des Endgeräts anzugeben, Zugang zu dem zweiten Netzwerk über duale Konnektivität zu erhalten, umfassen;
vorzugsweise wobei:
wenn das erste Netzwerk ein Netzwerk mit Kommunikationstechnologie der 5. Generation, 5G-Netzwerk, ist, das Endgerät eine Fähigkeit zum Zugang zu einem 5G-Kernnetzwerk über einen weiterentwickelten universellen terrestrischen Funkzugang, E-UTRA, unterstützt, und das Endgerät eine Fähigkeit zum Zugang zu dem 5G-Kernnetzwerk über neues Radio, NR, unterstützt; und
wenn das zweite Netzwerk ein Netzwerk mit Kommunikationstechnologie der 5. Generation, 5G-Netzwerk, ist, das Endgerät eine Fähigkeit zum Zugang zu einem 5G-Kernnetzwerk über einen weiterentwickelten universellen terrestrischen Funkzugang, E-UTRA, unterstützt, und das Endgerät eine Fähigkeit zum Zugang zu dem 5G-Kernnetzwerk über neues Radio, NR, unterstützt.

7. Kommunikationsverfahren, umfassend:
Senden (S604), durch eine Zugangsnetzwerkvorrichtung eines zweiten Netzwerks, einer Erlangungsnachricht zur drahtlosen Fähigkeit an ein Endgerät, wobei die Erlangungsnachricht zur drahtlosen Fähigkeit dazu verwendet wird, anzufordern, eine drahtlose Fähigkeit des Endgeräts zu erlangen; und
Empfangen (S605), durch die Zugangsnetzwerkvorrichtung des zweiten Netzwerks, einer ersten Benachrichtigungsnachricht von dem Endgerät, wobei die erste Benachrichtigungsnachricht dazu verwendet wird, anzugeben, dass das Endgerät einen Zugang zu einem ersten Netzwerk nicht unterstützt;
wobei:
die erste Benachrichtigungsnachricht keine ersten Informationen zur drahtlosen Fähigkeit umfasst, wobei die ersten Informationen zur drahtlosen Fähigkeit dazu verwendet werden, anzugeben, dass das Endgerät den Zugang zu dem ersten Netzwerk unterstützt, und die ersten Informationen zur drahtlosen Fähigkeit mindestens eines aus Informationen, die dazu verwendet werden, eine Funkfähigkeit des Endgeräts anzugeben, um Zugang zu dem ersten Netzwerk zu erhalten, Informationen, die dazu verwendet werden, eine Fähigkeit des Endgeräts anzugeben, von dem zweiten Netzwerk an das erste Netzwerk zu übergeben, Informationen, die dazu verwendet werden, eine Fähigkeit des Endgeräts anzugeben, von dem zweiten Netzwerk zu dem ersten Netzwerk umzuleiten, oder Informationen, die dazu verwendet werden, eine Fähigkeit des Endgeräts anzugeben, Zugang zu dem ersten Netzwerk über duale Konnektivität zu erhalten, umfassen.

8. Kommunikationsverfahren nach Anspruch 7, wobei das Kommunikationsverfahren ferner Folgendes umfasst:
Senden, durch die Zugangsnetzwerkvorrichtung des zweiten Netzwerks, von Übergabe-Angabeinformationen an eine Zielvorrichtung, wobei die Übergabe-Angabeinformationen dazu verwendet werden, anzugeben, dass das Endgerät einen Zugang zu dem ersten Netzwerk nicht unterstützt.

9. Kommunikationsverfahren nach Anspruch 7 oder 8, wobei das Kommunikationsverfahren vor dem Senden, durch eine Zugangsnetzwerkvorrichtung eines zweiten Netzwerks, einer Erlangungsnachricht zur drahtlosen Fähigkeit an ein Endgerät ferner Folgendes umfasst:
Herstellen, durch die Zugangsnetzwerkvorrichtung des zweiten Netzwerks, einer Kommunikationsverbindung mit dem Endgerät; und
Empfangen, durch die Zugangsnetzwerkvorrichtung des zweiten Netzwerks, von Angabeinformationen von einer Kernnetzwerkvorrichtung des zweiten Netzwerks, wobei die Angabeinformationen dazu verwendet werden, anzugeben, die drahtlose Fähigkeit des Endgeräts zu erlangen, oder dazu verwendet werden, anzugeben, dass die Zugangsnetzwerkvorrichtung des zweiten Netzwerks das Endgerät nicht mit dem ersten Netzwerk verbinden kann, und/oder wobei das Kommunikationsverfahren ferner Folgendes umfasst:
Empfangen, durch die Zugangsnetzwerkvorrichtung des zweiten Netzwerks, einer zweiten Benachrichtigungsnachricht von dem Endgerät, wobei die zweite Benachrichtigungsnachricht dazu verwendet wird, anzugeben, dass das Endgerät einen Zugang zu dem ersten Netzwerk unterstützt.

10. Kommunikationsverfahren nach einem der Ansprüche 7 bis 9, wobei
wenn das erste Netzwerk ein Netzwerk mit Kommunikationstechnologie der 5. Generation, 5G-Netzwerk, ist, die Funkfähigkeit des Endgeräts, um Zugang zu dem ersten Netzwerk zu erhalten, eine Fähigkeit des Endgeräts, einen Zugang zu einem 5G-Kernnetzwerk über einen weiterentwickelten universellen terrestrischen Funkzugang, E-UTRA, zu unterstützen, und eine Fähigkeit des Endgeräts, einen Zugang zu dem 5G-Kernnetzwerk über neues Radio, NR, zu unterstützen, umfasst.

11. Endgerät, wobei das Endgerät einen Prozessor umfasst und der Prozessor mit einem Speicher verbunden ist und Anweisungen in dem Speicher liest und ausführt, um die Schritte, die durch das Endgerät nach einem der Ansprüche 1 bis 6 durchgeführt werden, umzusetzen.

12. Zugangsnetzwerkvorrichtung, wobei die Zugangsnetzwerkvorrichtung einen Prozessor umfasst und der Prozessor dazu konfiguriert ist, mit einem Speicher verbunden zu werden und Anweisungen im Speicher liest und ausführt, um die durch die Zugangsnetzwerkvorrichtung gemäß einem der Ansprüche 7 bis 10 ausgeführten Schritte umzusetzen.

13. Kommunikationssystem, wobei das Kommunikationssystem das Endgerät nach Anspruch 11 und die Zugangsnetzwerkvorrichtung nach Anspruch 12 umfasst.

14. Computerlesbares Speichermedium, umfassend:
einen ersten Satz von Anweisungen, die, wenn sie durch ein Endgerät ausgeführt werden, das Endgerät dazu veranlassen, die Schritte, die durch das Endgerät nach einem der Ansprüche 1 bis 6 durchgeführt werden, umzusetzen; oder
einen zweiten Satz von Anweisungen, die, wenn sie durch eine Zugangsnetzwerkvorrichtung ausgeführt werden, die Zugangsnetzwerkvorrichtung dazu veranlassen, die Schritte, die durch die Zugangsnetzwerkvorrichtung nach einem der Ansprüche 7 bis 10 durchgeführt werden, umzusetzen.

## Revendications

1. Procédé de communication, comprenant :
la désactivation (S600), par un terminal, d'une capacité d'accès à un premier réseau ;
la réception (S604), par le terminal, d'un message d'obtention de capacité sans fil provenant d'un dispositif de réseau d'accès d'un second réseau, dans lequel le message d'obtention de capacité sans fil est utilisé pour demander l'obtention d'une capacité sans fil du terminal ; et
l'envoi (S605), par le terminal, d'un premier message de notification au dispositif de réseau d'accès du second réseau, dans lequel le premier message de notification est utilisé pour indiquer que le terminal ne prend pas en charge l'accès au premier réseau ;
le premier message de notification ne comprend pas de premières informations de capacité sans fil, dans lequel les premières informations de capacité sans fil sont utilisées pour indiquer que le terminal prend en charge l'accès au premier réseau, et les premières informations de capacité sans fil comprennent au moins l'une des informations utilisées pour indiquer une capacité radio du terminal à accéder au premier réseau, des informations utilisées pour indiquer une capacité du terminal à passer du second réseau au premier réseau, des informations utilisées pour indiquer une capacité du terminal à rediriger du second réseau vers le premier réseau, ou des informations utilisées pour indiquer une capacité du terminal à accéder au premier réseau par le biais d'une double connectivité.

2. Procédé de communication selon la revendication 1, dans lequel le procédé de communication comprend également :
l'envoi, par le terminal, de premières informations à un dispositif de réseau central du second réseau, dans lequel les premières informations sont utilisées pour indiquer que la capacité sans fil du terminal change.

3. Procédé de communication selon la revendication 1 ou 2, dans lequel le procédé de communication comprend également :
l'activation, par le terminal, de la capacité d'accéder au premier réseau ; et
l'envoi, par le terminal, d'un second message de notification au dispositif de réseau d'accès du second réseau, dans lequel le second message de notification est utilisé pour indiquer que le terminal prend en charge l'accès au premier réseau.

4. Procédé de communication selon l'une quelconque des revendications 1 à 3, dans lequel
si le premier réseau est un réseau 5G de technologie de communication de 5e génération, la capacité radio du terminal à accéder au premier réseau comprend une capacité du terminal à prendre en charge l'accès à un réseau central 5G par le biais d'un accès radio terrestre universel évolué E-UTRA, et une capacité du terminal à prendre en charge l'accès au réseau central 5G par le biais d'un nouveau NR radio.

5. Procédé de communication selon la revendication 1, comprenant également :
l'envoi (S602), par le terminal, d'informations de capacité NAS de non-accès à un dispositif de réseau central du second réseau, dans lequel les informations de capacité NAS sont utilisées pour indiquer que le terminal a désactivé une capacité d'accès au premier réseau de manière à amener le dispositif de réseau central du second réseau à :
envoyer des informations d'indication au dispositif de réseau d'accès du second réseau, dans lequel les informations d'indication sont utilisées pour indiquer au dispositif de réseau d'accès du second réseau d'obtenir la capacité sans fil du terminal, ou sont utilisées pour indiquer que le dispositif de réseau d'accès du second réseau ne peut pas connecter le terminal au premier réseau.

6. Procédé de communication selon la revendication 5, dans lequel, avant que le dispositif de réseau central du second réseau envoie les informations d'indication au dispositif de réseau d'accès du second réseau, le procédé de communication comprend également :
l'envoi, par le terminal, de premières informations au dispositif de réseau central du second réseau, dans lequel les premières informations sont utilisées pour indiquer que la capacité sans fil du terminal change de manière à amener le dispositif de réseau central à :
supprimer les premières informations de capacité sans fil et les secondes informations de capacité sans fil sur la base des premières informations, dans lequel les premières informations de capacité sans fil sont utilisées pour indiquer que le terminal prend en charge l'accès au premier réseau, et les secondes informations de capacité sans fil sont utilisées pour indiquer que le terminal prend en charge l'accès au second réseau ;
de préférence dans lequel :
les secondes informations de capacité sans fil comprennent au moins l'une des informations utilisées pour indiquer une capacité radio du terminal à accéder au second réseau, des informations utilisées pour indiquer une capacité du terminal à passer du premier réseau au second réseau, des informations utilisées pour indiquer une capacité du terminal à rediriger du premier réseau vers le second réseau, ou des informations utilisées pour indiquer une capacité du terminal à accéder au second réseau par le biais d'une double connectivité ;
de préférence dans lequel :
si le premier réseau est un réseau 5G de technologie de communication de 5e génération, le terminal prend en charge une capacité d'accéder à un réseau central 5G par le biais d'un accès radio terrestre universel évolué E-UTRA, et le terminal prend en charge une capacité d'accéder au réseau central 5G par le biais d'un nouveau NR radio ; et
si le second réseau est un réseau 5G de technologie de communication de 5e génération, le terminal prend en charge une capacité d'accéder à un réseau central 5G par le biais d'un accès radio terrestre universel évolué E-UTRA, et le terminal prend en charge une capacité d'accéder au réseau central 5G par le biais d'un nouveau NR radio.

7. Procédé de communication, comprenant :
l'envoi (S604), par un dispositif de réseau d'accès d'un second réseau, d'un message d'obtention de capacité sans fil à un terminal, dans lequel le message d'obtention de capacité sans fil est utilisé pour demander l'obtention d'une capacité sans fil au terminal ; et
la réception (S605), par le dispositif de réseau d'accès du second réseau, d'un premier message de notification provenant du terminal, dans lequel le premier message de notification est utilisé pour indiquer que le terminal ne prend pas en charge l'accès au premier réseau ;
dans lequel :
le premier message de notification ne comprend pas de premières informations de capacité sans fil, dans lequel les premières informations de capacité sans fil sont utilisées pour indiquer que le terminal prend en charge l'accès au premier réseau, et les premières informations de capacité sans fil comprennent au moins l'une des informations utilisées pour indiquer une capacité radio du terminal à accéder au premier réseau, des informations utilisées pour indiquer une capacité du terminal à passer du second réseau au premier réseau, des informations utilisées pour indiquer une capacité du terminal à rediriger du second réseau vers le premier réseau, ou des informations utilisées pour indiquer une capacité du terminal à accéder au premier réseau par le biais d'une double connectivité.

8. Procédé de communication selon la revendication 7, dans lequel le procédé de communication comprend également :
l'envoi, par le dispositif de réseau d'accès du second réseau, d'informations d'indication de transfert à un dispositif cible, dans lequel les informations d'indication de transfert sont utilisées pour indiquer que le terminal ne prend pas en charge l'accès au premier réseau.

9. Procédé de communication selon la revendication 7 ou 8, dans lequel avant l'envoi, par un dispositif de réseau d'accès d'un second réseau, d'un message d'obtention de capacité sans fil à un terminal, le procédé de communication comprend également :
l'établissement, par le dispositif de réseau d'accès du second réseau, d'une connexion de communication avec le terminal ; et
la réception, par le dispositif de réseau d'accès du second réseau, d'informations d'indication provenant d'un dispositif de réseau central du second réseau, dans lequel les informations d'indication sont utilisées pour indiquer d'obtenir la capacité sans fil du terminal, ou sont utilisées pour indiquer que le dispositif de réseau d'accès du second réseau ne peut pas connecter le terminal au premier réseau et/ou dans lequel le procédé de communication comprend également :
la réception, par dispositif de réseau d'accès du second réseau, d'un second message de notification provenant du terminal, dans lequel le second message de notification est utilisé pour indiquer que le terminal prend en charge l'accès au premier réseau.

10. Procédé de communication selon l'une quelconque des revendications 7 à 9, dans lequel
si le premier réseau est un réseau 5G de technologie de communication de 5e génération, la capacité radio du terminal à accéder au premier réseau comprend une capacité du terminal à prendre en charge l'accès à un réseau central 5G par le biais d'un accès radio terrestre universel évolué E-UTRA, et une capacité du terminal à prendre en charge l'accès au réseau central 5G par le biais d'un nouveau NR radio.

11. Terminal, dans lequel le terminal comprend un processeur, et le processeur est couplé à une mémoire, et lit et exécute des instructions dans la mémoire, pour mettre en œuvre les étapes réalisées par le terminal selon l'une quelconque des revendications 1 à 6.

12. Dispositif de réseau d'accès, dans lequel le dispositif de réseau d'accès comprend un processeur, et le processeur est configuré pour être couplé à une mémoire, et lit et exécute des instructions dans la mémoire, pour mettre en œuvre les étapes réalisées par le dispositif de réseau d'accès selon l'une quelconque des revendications 7 à 10.

13. Système de communication, dans lequel le système de communication comprend le terminal selon la revendication 11 et le dispositif de réseau d'accès selon la revendication 12.

14. Support de stockage lisible par ordinateur, comprenant :
un premier ensemble d'instructions qui, lorsqu'elles sont exécutées par un terminal, amènent le terminal à mettre en œuvre les étapes réalisées par le terminal selon l'une quelconque des revendications 1 à 6 ; ou
un second ensemble d'instructions qui, lorsqu'elles sont exécutées par un dispositif de réseau d'accès, amènent le dispositif de réseau d'accès à mettre en œuvre les étapes réalisées par le dispositif de réseau d'accès selon l'une quelconque des revendications 7 à 10.
